# EUROPEAN PATENT APPLICATION

(11) **EP 0 876 948 A2**
(43) Date of publication of application: **11.11.1998**
(21) Application number: 98610010.5
(22) Date of filing: 08.04.1998
(51) Int. Cl.: B62B 5/04

(54) **Parking brake or supporting leg, primarily for small vehicles**

(30) Priority: 11.04.1997 DK 41097
(71) Applicant: Fabriken Asbro ApS, 6715 Esbjerg N (DK)
(72) Inventor: Magard-Hansen, Ove, 6715 Esbjerg N (DK)
(74) Representative: Pedersen, Soeren Skovgaard

(57) **Abstract**

In connection with parking brakes for internal transport equipment it is desirable to have a mounting height as low as possible, as the free height for the bottom can be reduced hereby and the load capacity is increased. In view of this the present invention provides a parking brake or supporting leg, primarily for internal transport devices provided with wheels, such as a box carriage, a mail container, comprising an upper part which is adapted to be fixedly mounted on the underside of the transport device, a lower part which is provided with a brake shoe at the bottom and which is slidably mounted in the upper part, said upper and lower parts being both provided with telescoping profile pipes (2,3) in which a tension spring (14) is arranged, and a toggle mechanism comprising at least first and second toggle members (4,7) which are pivotally interconnected by means of a connecting pin (10), and which are moreover pivotally connected with the upper part and the lower part, respectively, for extension of the lower part, wherein at least the second toggle member (7) is provided with at least one oversized mounting hole (21,21a), preferably elongated, and wherein the connecting pin (10), arranged through this at least one hole (22a), between the toggle members (4,7) is connected with a guide means (8;80,81;82,83;84) for determining the pattern of movement of the toggle point of the toggle mechanism during displacement of the lower part with respect to the upper part.

## Description

The present invention relates to a parking brake or supporting leg, primarily for internal transport devices provided with wheels, such as a box carriage, a mail container, comprising an upper part which is adapted to be fixedly mounted on the underside of the transport device, a lower part which is provided with a brake shoe at the bottom and which is slidably mounted in the upper part, said upper and lower parts being both provided with telescoping profile pipes in which a tension spring is arranged, and a toggle mechanism comprising at least first and second toggle members which are pivotally interconnected by means of a connecting pin, and which are moreover pivotally connected with the upper part and the lower part, respectively, for extension of the lower part.

It is common to use internal transport and storage units provided with wheels in connection with the transport of goods on trucks or railway carriages. This transport and storage equipment is provided with parking brakes which can be activated when the units must not move, e.g. during transport. With this end in view, use is made of a parking brake which is arranged below the bottom of a container or the like and can be extended for braking by operating a foot pedal, and which can be retracted again by another foot operation. Brakes of this type are known e.g. from the US Patent Specifications No. US-A-2,712,366 and No. US-A-3,554,328.

These types of parking brakes, however, require a good deal of free height below the bottom of the container carriage, typically of the order of 200 mm or more, as it takes up some space even in the retracted state. However, an increase in the free space below the bottom of the container carriage in order to accommodate the brake results in a reduction in the load volume. The parking brake must moreover be capable of generating a sufficiently great braking force to ensure that also heavily loaded carriages can be kept braked.

To satisfy this, a parking brake of the type mentioned in the opening paragraph has recently been developed, where the mounting height is reduced by the use of a toggle mechanism with foot operation pedals for activating the parking brake. This provides a relatively compact structure of the parking brake, and the requirement with respect to the necessary free height of the container carriage can be reduced to an order of about 140 mm. This parking brake, however, has the drawback that the pedal arrangement protrudes laterally from the carriage, which exposes it to damage and furthermore puts a limit on how close the containers can be stacked.

It is desired to obtain an even lower mounting height, as the parking brake should preferably have a head room, preferably at least 30 mm, in its non-activated position, so that the container carriage may be driven across an irregular ground, a door step and the like. It should be mentioned in this connection that the wheels of such carriages have a standardized size, typically with a mounting height of 130, 140, 155, 185 and 200 mm.

Another requirement is that the structure must basically be sturdy, as the material is subjected to rough handling, just as the parking brake is liable to be used as a service brake.

Accordingly, the object of the invention is to provide a structure of a parking brake which has a low mounting height that is considerably lower than the free height of a transport container, and which can still generate the necessary braking power, and which can moreover be used in connection with small wheel sizes.

The invention comprises a parking brake or supporting leg of the type mentioned in the opening paragraph, wherein at least the second toggle member is provided with an oversized mounting hole, preferably elongated with respect to the diameter of the connecting pin, and the connecting pin, passing through this hole, between the toggle members is connected with a guide means for determining the pattern of movement of the toggle point of the toggle mechanism during displacement of the lower part with respect to the upper part.

With a parking brake or supporting shoe according to the invention, a sturdy, easily operable structure is obtained, exhibiting an extremely low mounting height as the elongated hole in the connecting link between the two toggle links allows a mutual angle between the toggle members of considerably less than 90°, whereby the difference between the retracted position and the extended position is extremely great.

This also means that the transmission for the brake pedal movement is so great that the necessary action does not exceed a reasonable foot action to brake even a heavy load. Thus, in a brake or supporting leg according to the invention the brake pedal need not protrude laterally from a transport container, as the pedal need not extend over the mounting plane of the upper part. The carriage may hereby optionally be provided with an indentation for foot operation, if it seems that there is no space below the container carriage under the given conditions.

To ensure that the lower part is extended correctly, a guide means is arranged in connection with the connecting point between the toggle members in the toggle connection, so that the toggle connection is guided during the extension and the retraction of the lower part in the upper part.

In a preferred embodiment of a parking brake or supporting leg according to the invention, the guide means comprises one or more link arms which are pivotally suspended from the upper part at a point different from the second link member. The mounting height may hereby be reduced additionally, and the parking brake according to the invention may be made additionally compact.

Furthermore, the link arm and the second link member may be formed with different lengths. This in combination with the fact that also the second link member and the link arm have different pivot points, means that one arm, preferably the longest one, which is the link arm in the preferred embodiment, can pull the other arm, i.e. the second link member, past the locking point where the angle between the two toggle members is 90°, thereby facilitating the extension of the brake.

Further, the link arms may also be provided with elongated mounting holes. An additional reduction in the mounting height may be obtained hereby.

In an alternative embodiment, the guide means may consist of a cam disc secured to the upper part. In the first embodiment, the cam disc may have a guide face with which the connecting pin, which is preferably provided with rollers, engages for guidance therealong.

In a second embodiment, the first toggle member may be provided with a separate guide pin which engages the cam disc.

This utilizes the circumstance that the upper and lower parts are connected with a tension spring which will pull the pin upwards toward the guide face. Extension may then take place in that the pin, be it the connecting pin or the separate guide pin, is guided in a curve guide. A compact structure having a low mounting height may likewise be obtained hereby.

Another embodiment may be that a locking pawl is arranged in connection with the toggle member, said locking pawl having a pivot point on the upper part, e.g. about the connecting pin, and being so constructed as to swing inwardly over and engage the end of the profile elbow of the lower part in the extended position of the lower part. A good locking of the toggle may be ensured hereby in the extended position, if conditions do not allow the link mechanism to "bend" too much.

In the preferred embodiment of the brake shoe, the brake shoe is formed with a centered depression at the top to receive the lower part, whereby the upper side of the brake shoe assumes the form of a brake cup. This additionally reduces the height of the parking brake or supporting leg according to the invention, as the brake shoe itself just protrudes slightly in front of the profile pipe in the lower part.

At the top, the brake shoe may be provided with a mounting plate whose underside has a ring-shaped hollow in which the friction material of the brake shoe is secured. The space around the mounting area is utilized hereby, as the friction material may be made with a good elasticity, making the brake less sensitive to torsions. The friction material may be attached to the hollow in the mounting plate via a plurality of compression springs, which are preferably alternately right-handed and left-handed in order that the springs do not work into each other, and that the brake shoe is additionally resistant to torsions.

The invention will be described more fully below with reference to the accompanying drawing, in which
- fig. 1: is a lateral view of a brake or supporting leg according to a first embodiment of the invention in a retracted state,
- fig. 2: is a sectional view of a detail in fig. 1,
- fig. 3: is a sectional view along the line ABC in fig. 1,
- fig. 4: is a view of a toggle member for a brake or supporting leg according to the invention,
- fig. 5: is a view of a link arm for use as a guide means according to the first embodiment of a brake or supporting leg according to the invention,
- fig. 6: is a lateral view of a brake foot according to a second embodiment of a parking brake according to the invention in a retracted, deactivated position,
- fig. 7: is a view of the same in an extended position,
- fig. 8: is a view of a third embodiment of a brake or supporting leg according to the invention, and
- fig. 9: is a view of a fourth embodiment of a parking brake according to the invention.

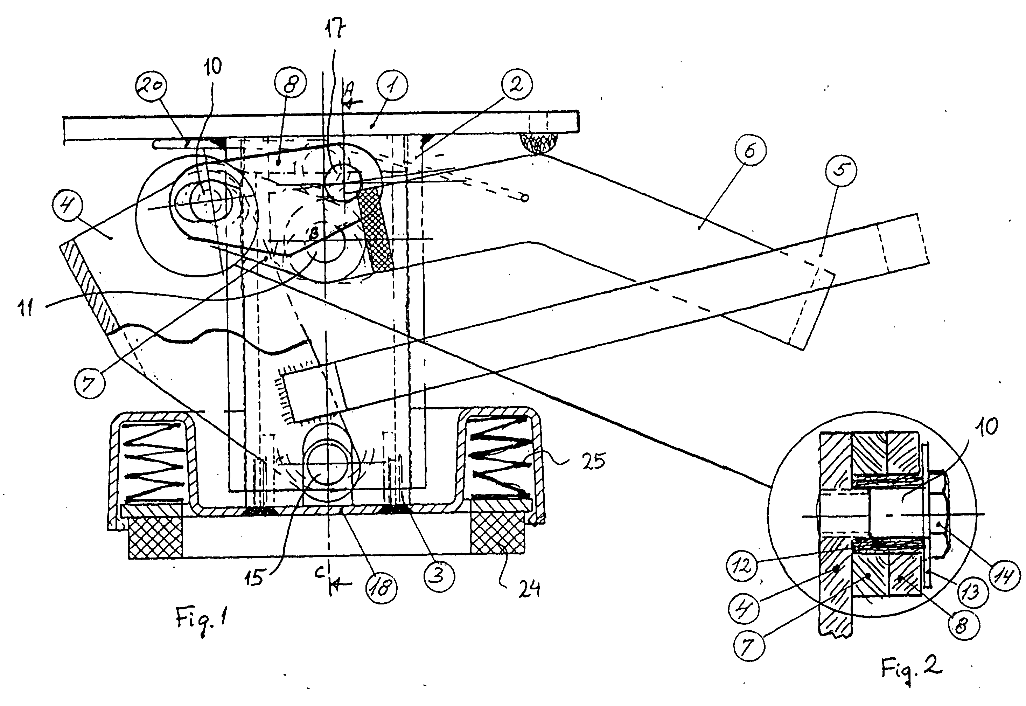

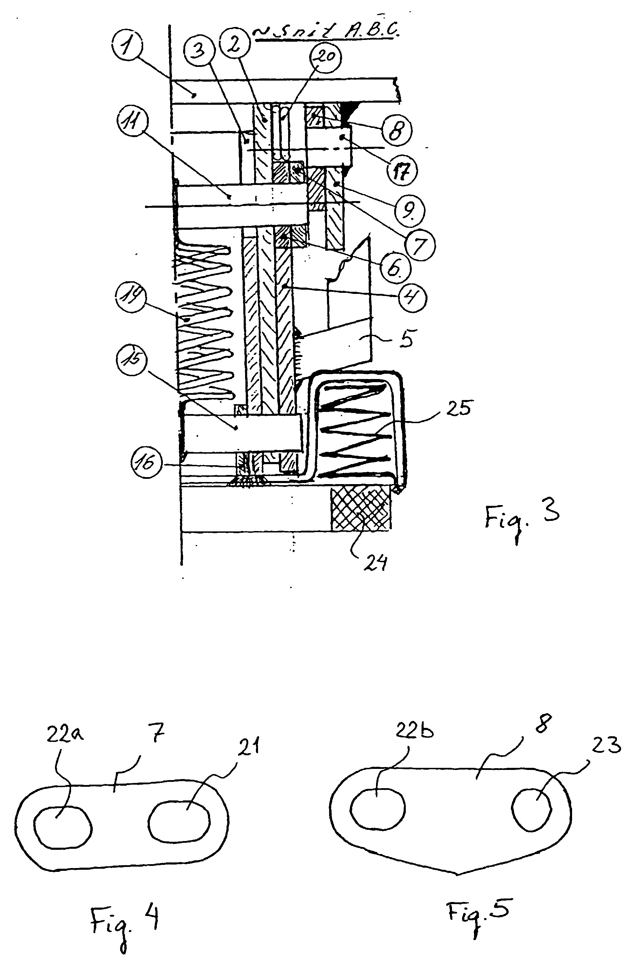

The parking brake, which is shown in fig. 1 and in detail in figs. 2 and 3, comprises an upper part and a lower part. The upper part comprises a top plate 1 and a downwardly directed profile pipe 2 welded thereon. The lower part comprises a profile pipe 3 on which a brake shoe 18 is mounted, preferably by screwing 16, said brake shoe being hereby easy to replace.

The profile pipe 2 of the upper part constitutes a cylinder pipe for the profile pipe 3 of the lower part, which thus serves as a piston pipe. The two pipes 2, 3 are formed with a non-circular cross-section, as the profile shape of the pipes can thus prevent relative rotation between the upper and lower parts. In the preferred embodiment, the profile pipes 2, 3 have a predominantly circular shape, with a longitudinal groove in the profile wall. Other shapes, however, are also possible, e.g. oval or polygonal cross-sections.

The upper and lower parts are connected with a toggle mechanism for extension and retraction of the parking brake or supporting leg.

The toggle mechanism comprises first and second toggle members 4, 7. In the preferred embodiment, the first toggle member 4 is shaped as a half-profile which is thus incorporated in the toggle mechanisms on each side of the brake foot. The elbow profile 4, which this half-profile is also called, is pivotally suspended from the pipe 3 of the lower part at the lower mounting shaft 15. At the top the elbow profile 4 is pivotally connected with the second toggle member, called the toggle link 7, by a connecting pin 10. The connection between the elbow profile 4 and the toggle link 7 moreover permits some displacement of the two toggle members 4, 7, since at least the mounting holes 21, 22a on the toggle link 7 (see fig. 4) are elongated.

The toggle link 7 is pivotally suspended from the bearing block 9 (see fig. 3) at the profile pipe 3 of the upper part at the upper mounting shaft 11. In the retracted, deactivated position, as shown in fig. 1, the toggle link 7 is positioned so that the bearing pin 10 is higher than the upper mounting shaft 11, whereby the angle between the toggle link 7 and the elbow profile 4 is considerably below 90°. The bearing pin 10 is moreover rotatably and slidably connected with a link arm 8, which is in turn pivotally connected with a bearing block 9 (not shown in fig. 1, but see fig. 3) on the upper part by a bearing pin 17. The link arm 8 and the toggle link 7 have different suspension points in the bearing block 9 of the upper part. The link arm 8 is formed with an elongated hole 22b for connection with the connecting pin 10, as shown in fig. 5.

The elbow profile 4 is provided with a pedal arm 5 for activation of the toggle mechanism and thereby the parking brake. Further, a release pedal 6 is arranged in connection with the toggle link 7 and is movably connected with the upper part by means of a spring device 20.

The upper and lower mounting shafts 11, 15 are connected with a tension spring 19 (see fig. 3) which is positioned internally in the profile pipes 2, 3. This spring is tensioned when the toggle mechanism is activated and will thus constantly draw the two parts together, except when the toggle mechanism is locked in the extended position.

The connecting pin 10 for pivotal connection of the elbow profile 4, the toggle link 7 and the link arm 8 may be constructed, as shown in fig. 2, with a set screw 14, a bearing bush pipe 12 and a washer 13, threads being cut in the hole in the elbow profile 4 for screwing-in of the set screw 14. This connection is duplicated on the other side of the parking brake.

When the pedal arm 5 is pushed down, the tensile force of the tension spring 12 is overcome and the elbow profile 4 is forced downwards with simultaneous pivotal movement, said toggle mechanism being hereby extended. The elbow profile 4 carries the piston pipe 3 and thereby the lower part along downwards. The connecting pin 10 moves in a rotating movement about both the upper and the lower mounting shaft 11, 15, and the pin 10 is simultaneously displaced inwards in the mounting hole 22a in the toggle link 7, just as the pin 10 will also move inwards in the toggle link 7, as the other mounting hole 21 of the toggle link is also elongated. The connecting pin 10 is guided by the link arm 8, whose pivot point is so positioned with respect to the upper and lower mounting shafts 11, 15 that no locking proper takes place between the elbow profile 4 and the link arm 8.

The elbow profile 4 and the toggle link 7 are locked when the connecting pin moves past the plane extending between the upper and lower mounting shafts 11, 15.

The top plate 1 on the upper part is formed with mounting holes (not shown) for mounting on the underside of a container carriage or the like.

The brake shoe 18, which is screwed on to the end of the profile pipe 3 of the lower part, is cup-shaped, as shown in several of the figures. The brake lining 24 is suspended from alternately right-handed and left-handed compression springs 25 in the shown embodiment.

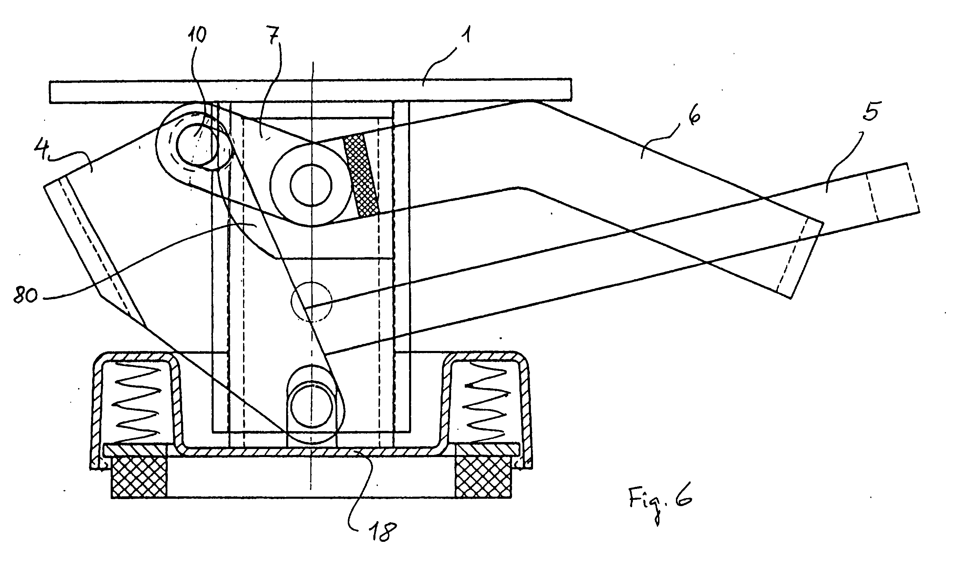

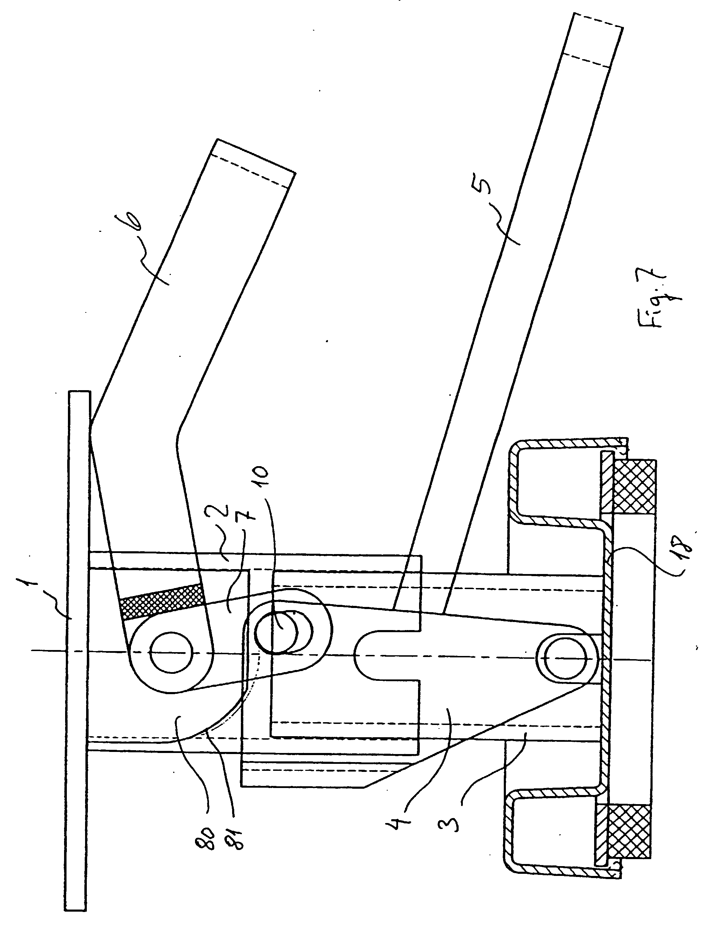

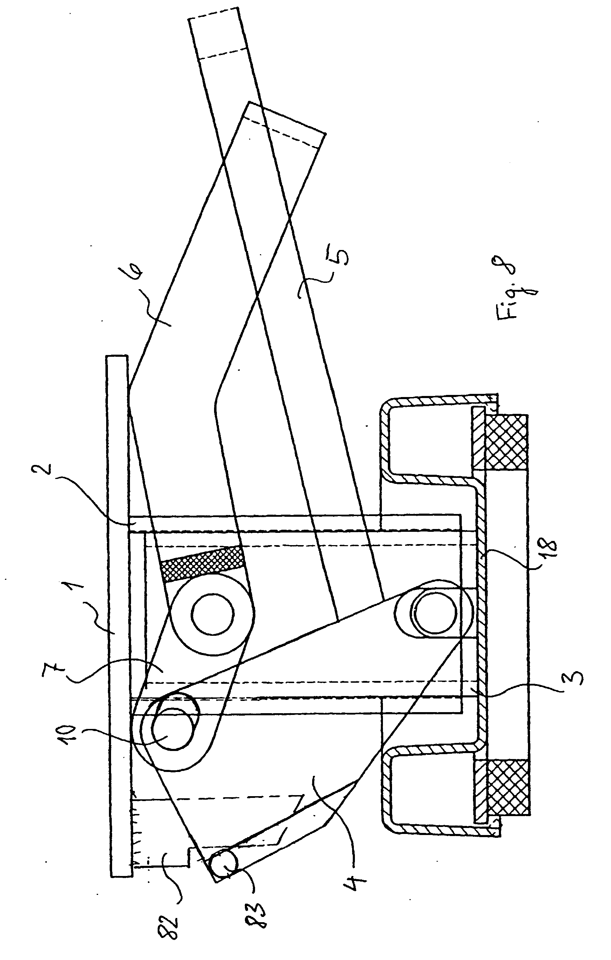

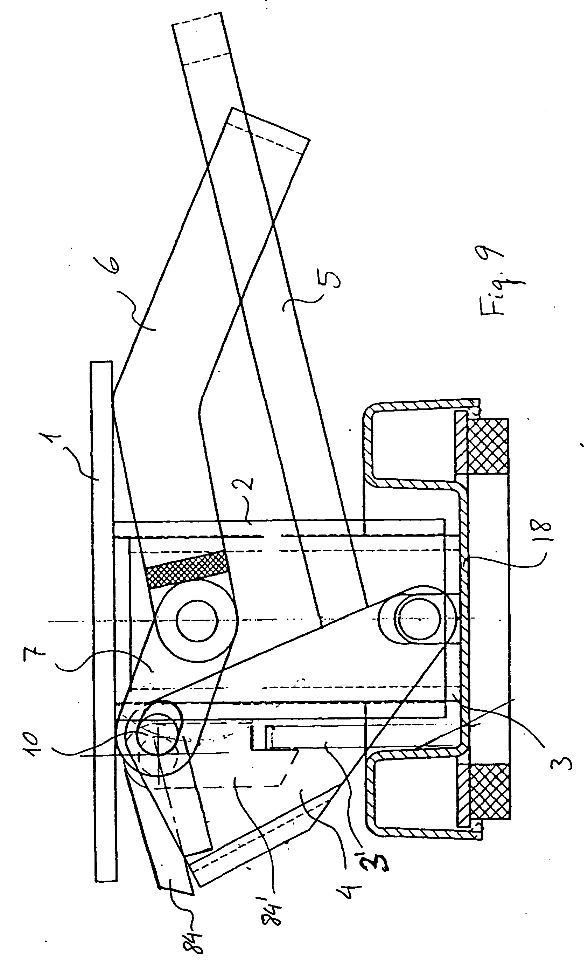

Figs. 6 and 7 show a second embodiment of a parking foot according to the invention. In this embodiment, instead of being constructed as a link arm 8, the guide means is constructed as a cam disc 80 which is attached to the upper part. The connecting pin 10 here slides along the guide face 81 of the cam disc and follows its course. The connecting pin 10 is kept in contact with the guide face 81 of the cam disc in the upward movement by means of the internal tension spring 14 and in the downward movement via the moment arm pressure from the pedal 5. The cam disc 80 will be able to move the toggle mechanism clear of the negative locking function by activation of either the pedal arm 5 or the release pedal 6. The pin 10 may optionally be provided with a roller to avoid wear on the pin 10 and/or the cam disc 80.

In the embodiment shown in figs. 6 and 7, the cam disc 80 is positioned on the side or sides of the profile pipe 2 of the upper side. Further, the guide face 81 of the cam disc is curved continuously. As an alternative, the guide means may be constructed as a discontinuously curved cam disc 82 or guide arm(s), as shown in fig. 8. A guide arm is welded to the top plate at a distance from the profile pipe 2 in alignment with an outer edge of the elbow profile 4, which is here provided with a guide pin 83 engaging the guide arm 82 to guide the pivotal movement of the elbow profile during extension and retraction of the lower part.

Fig. 9 shows a fourth embodiment in which a pawl 84 swings down together with the elbow profile 4 and moves this elbow profile 4 and thereby the pivot point out and clear of the negative locking function. The position of the pawl in the extended state is shown in dashed line by the reference numbers 84' and 3'.

## Claims

1. A parking brake or a supporting leg, primarily for internal transport devices provided with wheels, such as a box carriage, a mail container, comprising
an upper part which is adapted to be fixedly mounted on the underside of the transport device,
a lower part which is provided with a brake shoe at the bottom and which is slidably mounted in the upper part,
said upper and lower parts being both provided with telescoping profile pipes (2, 3) in which a tension spring (14) is arranged, and
a toggle mechanism comprising at least first and second toggle members (4, 7) which are pivotally interconnected by means of a connecting pin (10), and which are moreover pivotally connected with the upper part and the lower part, respectively, for extension of the lower part,
**characterized** in that at least the second toggle member (7) is provided with at least one oversized mounting hole (21, 22a), preferably elongated with respect to the diameter of the connecting pin (10), and
that the connecting pin (10), arranged through said at least one hole (22a), between the toggle members (4, 7) is connected with a guide means (8; 80, 81; 82, 83; 84) for determining the pattern of movement of the toggle point of the toggle mechanism during displacement of the lower part with respect to the upper part.

2. A parking brake or supporting leg according to claim 1, **characterized** in that the guide means comprises one or more link arms (8) which are pivotally suspended from the upper part at a point different from the second link member (7).

3. A parking brake or supporting leg according to claim 2, **characterized** in that the link arm (8) and the second link member (7) have different lengths.

4. A parking brake or supporting leg according to claim 2 or 3, **characterized** in that the link arms (8) are provided with at least one oversized mounting hole (22b), preferably elongated.

5. A parking brake or supporting leg according to claim 1, **characterized** in that the guide means consists of a cam disc (80, 82) secured to the upper part.

6. A parking brake or supporting leg according to claim 5, **characterized** in that the cam disc (80) has a guide face (81) with which the connecting pin (10), preferably provided with rollers, engages for guidance therealong.

7. A parking brake or supporting leg according to claim 5, **characterized** in that the first toggle member (4) is provided with a separate guide pin (83) which engages the cam disc (82).

8. A parking brake or supporting leg according to claim 1, **characterized** in that a locking pawl (84) is arranged in connection with the toggle member (4), said locking pawl having a separate point of rotation on the upper part and being so constructed that, in the extended position of the leg, it rests against and, with the brake retracted, pivots outwards together with and urges the toggle member (4) and thereby the connecting pin (10) out of the negative locking function.

9. A parking brake or supporting leg according to any one of the preceding claims, **characterized** in that the brake shoe (18) is provided with a centered depression at the top to receive the lower part.

10. A parking brake or supporting leg according to claim 9,**characterized** in that the brake shoe (18), at the top, is provided with a mounting plate whose underside has a ring-shaped hollow in which the friction material (24) of the brake shoe is secured.

11. A parking brake or supporting leg according to claim 10, **characterized** in that the friction material (24) is secured to the hollow in the mounting plate via a plurality of compression springs (25) which are preferably alternately right-handed and left-handed.
